(19) Europäisches Patentamt / European Patent Office / Office européen des brevets

(11) **EP 2 920 898 B1**

(12) **EUROPEAN PATENT SPECIFICATION**

(45) Date of publication and mention of the grant of the patent:
**08.08.2018 Bulletin 2018/32**

(51) Int Cl.:
**H04B 17/00** (2015.01)   **H04B 1/10** (2006.01)

(21) Application number: **13856022.2**

(22) Date of filing: **14.11.2013**

(86) International application number:
**PCT/KR2013/010319**

(87) International publication number:
**WO 2014/077594 (22.05.2014 Gazette 2014/21)**

(54) **WHITENING METHOD AND APPARATUS IN COMMUNICATION SYSTEM**

AUFHELLUNGSVERFAHREN UND -VORRICHTUNG IN EINEM DRAHTLOSEN KOMMUNIKATIONSSYSTEM

PROCÉDÉ ET APPAREIL DE BLANCHIMENT DANS UN SYSTÈME DE COMMUNICATION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **14.11.2012   US 201261726528 P**
**16.05.2013   US 201313895678**

(43) Date of publication of application:
**23.09.2015   Bulletin 2015/39**

(73) Proprietor: **Samsung Electronics Co., Ltd.**
**Suwon-si, Gyeonggi-do 443-742 (KR)**

(72) Inventors:
 • **YU, Yingqun**
 **San Diego, California 92127 (US)**
 • **LEE, Jung-Won**
 **San Diego, California 92130 (US)**

(74) Representative: **HGF Limited**
**Saviour House**
**9 St. Saviourgate**
**York YO1 8NQ (GB)**

(56) References cited:
US-A1- 2006 056 549    US-A1- 2009 279 631
US-A1- 2010 202 571    US-A1- 2012 033 683
US-A1- 2012 163 488    US-A1- 2012 250 808

• ZIJIAN BAI ET AL: "Interference estimation for multi-layer MU-MIMO transmission in LTE-Advanced systems", 2012 IEEE 23RD INTERNATIONAL SYMPOSIUM ON PERSONAL, INDOOR AND MOBILE RADIO COMMUNICATIONS (PIMRC 2012) : SYDNEY, AUSTRALIA, 9 - 12 SEPTEMBER 2012, IEEE, PISCATAWAY, NJ, 9 September 2012 (2012-09-09), pages 1622-1626, XP032272800, DOI: 10.1109/PIMRC.2012.6362608 ISBN: 978-1-4673-2566-0
• ZIJIAN BAI ET AL: "On the Receiver Performance in MU-MIMO Transmission in LTE", 2013 5TH INTERNATIONAL CONGRESS ON ULTRA MODERN TELECOMMUNICATIONS AND CONTROL SYSTEMS AND WORKSHOPS (ICUMT), 30 June 2011 (2011-06-30), pages 1-6, XP055279357, ISSN: 2157-0221 ISBN: 978-1-4799-1376-3

## Description

### Technical Field

An exemplary embodiment of the present invention relates a whitening method and apparatus in a communication system.

### Background Art

Modern consumer and industrial electronics, especially devices such as cellular phones, navigations systems, portable digital assistants, and combination devices, are providing increasing levels of functionality to support modern life including mobile communication. Research and development in the existing technologies can take a myriad of different directions.

The increasing demand for information in modern life requires users to access information at any time, at increasing data rates. However, telecommunication signals used in mobile communication experience various types of interferences from numerous sources, as well as computational complexities rising from numerous possible formats for communicated information, which affect the quality and speed of the accessible data. The document XP032272800 "Interference estimation for multi-layer MU-MIMO transmission in LTE-Advanced systems" describes a receiver including a whitening filter.

A need still remains for an improved communication system with whitening mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

The above information is presented as background information only to assist with an understanding of the present disclosure. No determination has been made, and no assertion is made, as to whether any of the above might be applicable as prior art with regard to the present invention.

### Disclosure of Invention

### Technical Problem

Solutions to these problems have been long sought but prior developments have not taught or suggested any solutions and, thus, solutions to these problems have long eluded those skilled in the art.

### Solution to Problem

Aspects of the present invention are to address at least the above-mentioned problems and/or disadvantages and to provide at least the advantages described below. Accordingly, an aspect of the present invention is to provide a whitening method and apparatus in a communication system.

In accordance with an aspect of the present invention provides a receiver in a communication system, including: a signal analysis module configured to receive, from a transmitter, a signal including an interference signal; a covariance module, coupled to the signal analysis module, configured to calculate a joint-covariance by using first subcarrier data and second subcarrier data included in the received signal; a preparation module, coupled to the covariance module, configured to generate a joint-whitener based on the joint-covariance for randomizing the interference signal; and a joint whitening module, coupled to the preparation module, configured to generate a joint-whitened data based on the received signal and the joint-whitener for communicating with the transmitter.

In accordance with another aspect of the present invention provides a method for performing a whitening operation by a receiver in a communication system including: receiving, from a transmitter, a signal including an interference signal; calculating a joint-covariance by using first subcarrier data and second subcarrier data included in the received signal; generating a joint-whitener based on the joint-covariance for randomizing the interference signal; and generating a joint-whitened data based on the received signal and the joint-whitener for communicating with the transmitter.

Other aspects, advantages, and salient features of the invention will become apparent to those skilled in the art from the following detailed description, which, taken in conjunction with the annexed drawings, discloses exemplary embodiments of the invention.

**Brief Description of Drawings**

The above and other aspects, features, and advantages of certain exemplary embodiments of the present invention will be more apparent from the following description taken in conjunction with the accompanying drawings, in which:

FIG. 1 is a communication system with whitening mechanism in an exemplary embodiment of the present invention.
FIG. 2 is an exemplary communication between the base station and the mobile device.
FIG. 3 is an exemplary block diagram of the communication system.
FIG. 4 is a control flow of the communication system.
FIG. 5 is a flow chart of a method of operation of a communication system in an exemplary embodiment of the present invention.

Throughout the drawings, it should be noted that like reference numbers are used to depict the same or similar elements, features, and structures.

**Mode for the Invention**

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The following exemplary embodiments of the present invention can be used to process receiver signal corresponding to transmissions using a space-frequency block-coding scheme. An adapted instance of a reference portion in the receiver signal can indicate that a transmitter signal, an interference signal, or a combination thereof was originally transmitted according to the space-frequency block-coding scheme.

A signal profile can characterize a transmission status of the transmitter signal, the interference signal, or a combination thereof. Joint-covariance and joint-whitener can be calculated and generated to comprehensively or jointly whiten and further process the receiver signal based on the signal profile. A joint-whitened data can be jointly detected and decoded to determine a communication content as originally intended for communication.

The signal profile and the reference portion adapted or adjusted to include information regarding the space-frequency block-coding scheme and provide increased accuracy and higher throughput. Also, the joint-covariance and the joint-whitener provide decreased error rate. Further, the joint-whitened data and the joint detection process provide increased transmission speed.

The following exemplary embodiments are described in sufficient detail to enable those skilled in the art to make and use the invention. It is to be understood that other exemplary embodiments would be evident based on the present disclosure, and that system, process, or mechanical changes may be made without departing from the scope of an exemplary embodiment of the present invention.

In the following description, numerous specific details are given to provide a thorough understanding of the invention. However, it will be apparent that the invention may be practiced without these specific details. In order to avoid obscuring an exemplary embodiment of the present invention, some well-known circuits, system configurations, and process steps are not disclosed in detail.

The drawings showing exemplary embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The exemplary embodiments have been numbered first exemplary embodiment, second exemplary embodiment, etc. as a matter of descriptive convenience and are not intended to have any other significance or provide limitations for an exemplary embodiment of the present invention.

The term "module" referred to herein can include software, hardware, or a combination thereof in an exemplary embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a Micro Electro Mechanical System (MEMS), passive devices, or a combination thereof.

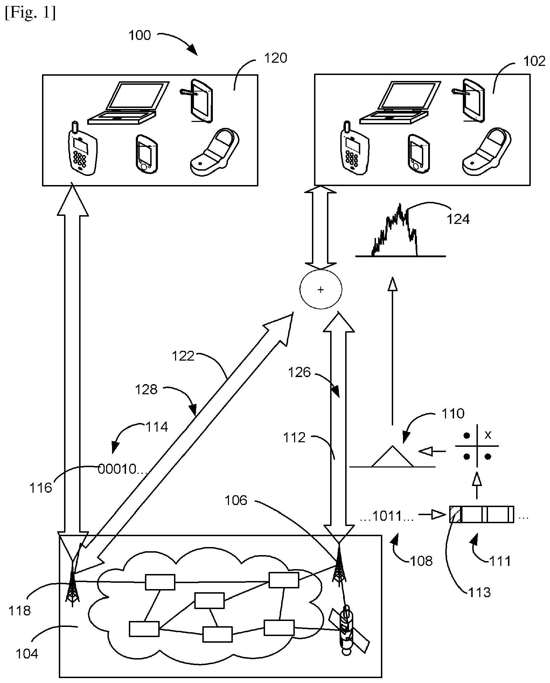

The term "processing" as used herein includes filtering signals, decoding symbols, assembling data structures, transferring data structures, manipulating data structures, and reading and writing data structures. Data structures are defined to be information arranged as symbols, packets, blocks, files, input data, system generated data, such as calculated or generated data, and program data.FIG. 1 is shown a communication system 100 with whitening mechanism in an exemplary embodiment of the present invention. The communication system 100 includes a mobile device 102, such as a cellular phone or a notebook computer, connected to a network 104. The network 104 is a system of wired or wireless communication devices that are connected to each other for enabling communication between devices.

For example, the network 104 can include a combination of wires, transmitters, receivers, antennas, towers, stations, repeaters, telephone network, servers, or client devices for a wireless cellular network. The network 104 can also include a combination of routers, cables, computers, servers, and client devices for various sized area networks.

The network 104 can include a base station 106 for directly linking and communicating with the mobile device 102. The base station 106 can receive wireless signals from the mobile device 102, transmit signals to the mobile device 102, process signals, or a combination thereof. The base station 106 can also relay signals between other base stations, components within the network 104, or a combination thereof.

The mobile device 102 can be connected to the network 104 through the base station 106. For example, the base station 106 can include or be coupled with a cell tower, a wireless router, an antenna, a processing device, or a combination thereof being used to transmit signals to or receive signals from the mobile device 102, such as a smart phone or a laptop computer.

The mobile device 102 can connect to and communicate with other devices, such as other mobile devices, servers, computers, telephones, or a combination thereof. The mobile device 102 can communicate with other devices by transmitting signals, receiving signals, processing signals, or a combination thereof and displaying a content of the signals, audibly recreating sounds according to the content of the signals, processing according to the content, such as storing an application or updating an operating system.

The base station 106 can be used to wirelessly exchange signals for communication, including voice signals of a telephone call or data representing a webpage and interactions therewith. The base station 106 can also transmit reference signals, training signals, error detection signals, error correction signals, header information, transmission format, protocol information, or a combination thereof.

Based on the communication method, such as a Code Division Multiple Access (CDMA), an Orthogonal Frequency-Division Multiple Access (OFDMA), a Third Generation Partnership Project (3GPP), Long Term Evolution (LTE), or fourth generation (4G) standards, the communication signals can include a reference portion, a header portion, a format portion, an error correction or detection portion, or a combination thereof imbedded in the communicated information. The reference portion, the header portion, the format portion, the error correction or the detection portion, or the combination thereof can include a predetermined bit, a pulse, a wave, a symbol, or a combination thereof. The various portions can be embedded within the communicated signals at regular time intervals, a frequency, a code, or a combination thereof.

The base station 106 can communicate a communication content 108 by transmitting a transmitter signal 110 to the mobile device 102. The communication content 108 is data from a transmitting device intended for communication by reproduction or processing at a receiving device. For example, the communication content 108 can be a sequence of bits intended for displaying, audibly recreating, executing instructions, storing, or a combination thereof at a receiving device, such as the mobile device 102.

The base station 106 can modify the communication content 108 to generate and transmit the transmitter signal 110. The transmitter signal 110 is data actually transmitted by a device for communication and having a format for transmission. The base station 106 can generate the transmitter signal 110 by modifying, such as by interleaving or adding formatting information, the communication content 108 according to methods or standardizations predetermined by the communication system 100 to generate a code word 111. The code word 111 is a unit of information having a length predetermined by the communication system 100 for communicating information between devices.

For example, the transmitter signal 110 can be the code word 111 including a sequence of bits representing the communication content 108, an informational portion, a processing portion, an error correction portion, a format portion, or a combination thereof. Also for example, the transmitter signal 110 can be a sequence of symbols according to a modulation scheme, such as a Quadrature Amplitude Modulation (QAM) or a Phase-Shift Keying (PSK), corresponding to the sequence of bits.

The transmitter signal 110 can further include a reference portion 113. The reference portion 113 is a known signal transmitted by a device that is used to determine various types of information at a receiving device. The reference portion 113 can include a bit, a symbol, a signal pattern, a signal strength, a frequency, a phase, a duration, or a combination thereof predetermined by the communication system 100, a standard, or a combination thereof. The details of the reference portion 113 can be known and used by one or all devices in the communication system 100.

The reference portion 113 can include generic or cell-specific information. The reference portion 113 can further include information regarding a transmission format. The detail, the structure, the content, or a combination thereof for the reference portion 113 can be used by the receiving device, such as the mobile device 102, to determine information regarding a mechanism used to transmit data.

The transmitter signal 110 can arrive at the mobile device 102 after traversing a transmitter channel 112. The transmitter channel 112 can be wireless, wired, or a combination thereof. The transmitter channel 112 can be a direct link between the mobile device 102 and the base station 106 or can include repeaters, amplifiers, or a combination thereof. For example, the transmitter channel 112 can include a communication frequency, a time slot, a packet designation, a transmission rate, a channel code, or a combination thereof used for transmitting signals between the mobile device 102 and the base station 106.

The mobile device 102 can receive signals from other unintended sources. The mobile device 102 can receive an interference signal 114 including an interference content 116 from an interference source 118. The interference content 116 is data unintended for communication at the receiving device. The interference content 116 can be similar to the communication content 108 but intended for communication with a different device 120 and received by the mobile device 102 or for a purpose not currently utilized by the mobile device 102.

The interference source 118 can be any source generating signals unintended for a specific receiver. The interference signal 114 is data actually transmitted by the interference source 118 for communication and having a format for transmission. The interference signal 114 can be similar to the transmitter signal 110 and include bits or symbols representing modifications, such as by interleaving or adding formatting information, for the interference content 116.

For example, the interference signal 114 can be transmissions intended for the difference device 106 but received at the mobile device 102. Also for example, the interference signal 114 can include signals intended for communication with the mobile device 102 for a currently unrelated purpose or for a function currently not accessed on the mobile device 102.

As a more specific example, the interference source 118 can include various transmitters, including a base station or a satellite dish, another mobile communication device, such as a smart phone or a laptop computer, a broadcasting station, such as for a television or a radio, or a combination thereof. Also for example, the interference signal 114 can include wireless signals carrying a voice or webpage information associated with a phone other than the mobile device 102 or broadcasted television signals when the mobile device 102 is not accessing the television viewing feature.

The interference signal 114 can traverse an interference channel 122 to arrive at the mobile device 102. The interference channel 122 can be similar to the transmitter channel 112 but for the differences in characteristics due to geographical differences between the base station 106 and the interference source 118, due to differences in method of communication or resources used between the transmitter signal 110 and the interference signal 114, or a combination thereof.

For example, the interference channel 122 can be wireless, wired, or a combination thereof. The interference channel 122 can be an unintended direct link between the mobile device 102 and the interference source 118, or include repeaters, amplifiers, or a combination thereof. Also for example, the interference channel 122 can include a communication frequency, a time slot, a packet designation, a transmission rate, a channel code, or a combination thereof used for transmitting signals between the interference source and the different device 120, and further accessible by the mobile device 102.

The mobile device 102 can receive a receiver signal 124. The receiver signal 124 is information received by a device in the communication system 100. The receiver signal 124 can include the transmitter signal 110 that has been altered from traversing the transmitter channel 112. The receiver signal 124 can further include the interference signal 114 that has been altered from traversing the interference channel 122.

The communication system 100 can estimate a serving channel estimate 126 and an interference channel estimate 128 from the receiver signal 124. The serving channel estimate 126 is a description of changes to signals caused by the transmitter channel 112. The serving channel estimate 126 can describe and a quantize reflection, a loss, a delay, a refraction, an obstructions, or a combination thereof a signal can experience while traversing between the base station 106 and the mobile device 102. The serving channel estimate 126 can be a matrix value characterizing the transmitter channel 112.

The interference channel estimate 128 is a description of changes to signals caused by the interference channel 122. The interference channel estimate 128 can describe and a quantize a reflection, a loss, a delay, a refraction, an obstructions, or a combination thereof a signal can experience while traversing between the interference source 118 and the mobile device 102. The interference channel estimate 128 can be a matrix value characterizing the interference channel 122.

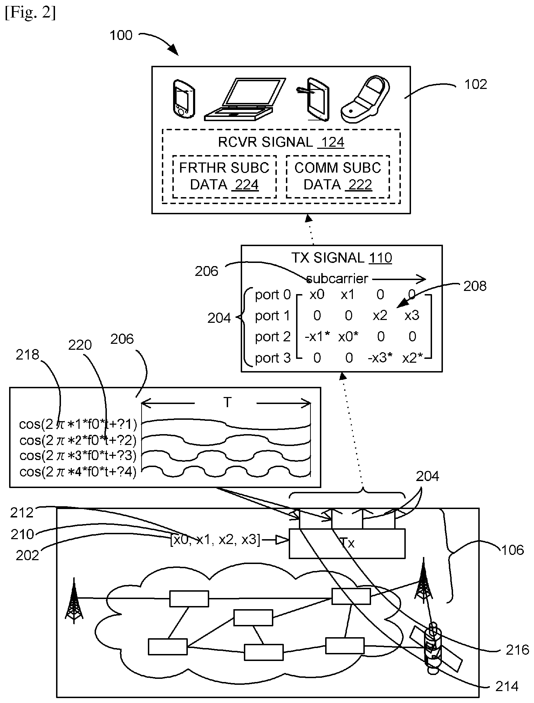

For illustrative purposes, the communication system 100 is described as communicating by transmitting from the base station 106 and receiving at the mobile device 102. However, it is understood that the communication system 100 can also transmit from the mobile device 102 and receive at the base station 106.FIG. 2 is shown an exemplary communication between the base station 106 and the mobile device 102. The base station 106 can generate and transmit the transmission signal 110 corresponding to a word-set 202. The word-set 202 is a grouping of the code word 111 of FIG. 1. The word-set 202 can include the grouping including a quantity of code words, with the quantity corresponding to a number of antenna ports 204 being used to communicate the transmission signal 110.

The antenna ports 204 are paths or interfaces for accessing individual antennas for communicating with another device. The antenna ports 204 can each include or connect a device for radiating or receiving radio waves.

Each of the antenna ports 204 can use subcarriers 206 for transmitting the transmission signal 110. The subcarriers 206 are a set of independent frequencies, phases, or a combination thereof for communicating with another device. The subcarriers 206 can be a set of frequencies that are orthogonal to each other.

The communication system 100 can use the subcarriers 206 and the antenna ports 204 to communicate the transmission signal 110. The base station 106 can use the subcarriers 206 and the antenna ports 204 to transmit the transmission signal 110.

The communication system 100 can use a Space-Frequency Block-Coding (SFBC) scheme 208. The SFBC scheme 208 is a method for arranging instances of the code word 111 across multiple antennas and frequencies. The SFBC scheme 208 can include a pattern for the instances of the code word 111 based on the quantity of the antenna ports 204.

For example, the base station 106 can include two instances of the antenna ports 204 for transmitting two instances of the code word 111. The base station 106 can transmit a communication word 210 and a further word 212 as the communication content 108 of FIG. 1 or exclusive portions therein. The base station 106 can transmit using a communication port 214 and a further port 216, with each port using a communication subcarrier 218 and a further subcarrier 220.

Continuing with the example, the SFBC scheme 208 can be represented as:

[Math Figure 1]

$$\begin{matrix} port\ 0 \\ port\ 1 \end{matrix} \begin{bmatrix} x_0 & x_1 \\ -x_1^* & x_0^* \end{bmatrix}.$$

The terms '$x_0$' and '$x_1$' can represent the communication word 210 and the further word 212, respectively, while '$x_0^*$' can represent a complex-conjugate of the communication word 210. The terms 'port 0' and 'port 1' can represent the communication port 214 and the further port 216, respectively. First column of matrix values in Math Figure 1 can correspond to instances of the code word 111 transmitted using the communication subcarrier 218. Second column of the matrix values in Math Figure 1 can correspond to instance of the code word 111 transmitted using the further subcarrier 220.

The reference portion 113 of FIG. 1 can include information regarding whether a signal was transmitted using the SFBC scheme 208. For example, the detail, the structure, the content, or a combination thereof for the reference portion 113 in the transmitter signal 110, the interference signal 114 of FIG. 1, or a combination thereof can indicate that the corresponding signal was transmitted using the SFBC scheme 208. The reference portion 113 can be specifically adapted or adjusted to include information regarding the SFBC scheme 208.

It has been discovered that the reference portion 113 adapted or adjusted to include information regarding the SFBC scheme 208 used to transmit signals provide increased accuracy and higher throughput. The adapted instance of the reference portion 113 can be used by the communication system 100 to comprehensively or jointly whiten and further process data across the subcarriers 206 within the receiver signal 124 of FIG. 1. The comprehensive or joint whitening and processing can account for the correlated nature of signals or correlated portions within a signal due to the use of the SFBC scheme 208.

For illustrative purposes, the communication system 100 will be described as a Multiple-Input Multiple-Output (MIMO) system including two instances of the antenna ports 204 and using two instances of the subcarriers 206 for communicating two instances of the code word 111 in the word-set 202. However, it is understood that the communication system 100 can include a different configuration. For example, the communication system 100 can include four antenna ports, four subcarriers, four code words, or a combination thereof as shown in FIG. 2.

The mobile device 102 can receive the receiver signal 124 corresponding to the transmitter signal 110. The receiver signal 124 can include a communication subcarrier data 222 and a further subcarrier data 224. The communication subcarrier data 222 is a portion in the receiver signal 124 corresponding to the communication subcarrier 218. The communication subcarrier data 222 can be the data in the receiver signal 124 received through the communication port 214, the further port 216, or a combination thereof. The communication subcarrier data 222 can correspond to the communication word 210, the further word 212, a portion thereof, or a combination thereof.

The further subcarrier data 224 is a portion in the receiver signal 124 corresponding to the further subcarrier 220. The further subcarrier data 224 can be the data in the receiver signal 124 received through the communication port 214, the further port 216, or a combination thereof. The further subcarrier data 224 can correspond to the communication word 210, the further word 212, a portion thereof, or a combination thereof.

For illustrative purposes, above elements of the communication system 100 has been described for the transmitter signal 110 in communicating between the base station 106 and the mobile device 106. However, it is understood that the interference source 118 of FIG. 1 and the interference signal 114 can include the above described elements.

For example, the interference source 118 can include the antenna ports 204, use the subcarriers 206 for one or more of the antenna ports 204, or a combination thereof. The interference source 118 can transmit multiple instances of the code word 111, as independent data or according to the space-frequency block-coding scheme.

Focusing on the transmitter signal 110, the receiver signal 124 can be expressed as:

[Math Figure 2]

$$y_{n_r \times 1}(k) = H_{n_r \times n_t}(k) x_{n_t \times 1}(k) + v_{n_r \times 1}(k).$$

For Math Figure 2, 'k' can represent an index for the subcarriers 206. For example, 'k' can represent a portion of the receiver signal 124 corresponding to the communication subcarrier 218, such as the communication subcarrier data 222, 'k+1' or 'k' can represent a portion of the receiver signal 124 corresponding to the further subcarrier, such as the further subcarrier data 224, or a combination thereof.

Further, the term '$n_t$' can represent a quantity of antennas on a transmitting device, such as the base station 106 or the interference source 118, while '$n_r$' can represent a quantity of antennas on a receiving device, such as the mobile device 102. The term '$x_{n_t \times 1}(k)$' can represent a transmitted symbol vector, such as in the interference signal 114 or the transmitter signal 110, having a size of '$n_t$x1', while the term '$y_{n_r \times 1}(k)$' can represent a received symbol vector, such as in the receiver signal 124, having a size of '$n_t$x1'.

Moreover, the term, '$H_{n_r \times n_t}(k)$' can represent an equivalent channel matrix having a size '$n_r \times n_t$', such as for the serving channel estimate 126 of FIG. 1, the interference channel estimate 128 of FIG. 1, or a combination thereof. The (i, j)th element for '$H_{n_r \times n_t}(k)$' can be denoted by '$h_{i,j}(k)$'. The term '$v_{n_r \times 1}(k)$' can represent a circularly-symmetric complex Gaussian (CSCG) random noise vector having a size of '$n_r \times 1$'..

The communication system 100 can comprehensively or jointly process the communication subcarrier data 222 and the further subcarrier data 224 when the transmitter signal 110, the interference signal 114, or a combination thereof is transmitted according to the SFBC scheme 208. The communication system 100 can comprehensively or jointly calculate covariance, whiten, detect, decode, or a combination thereof for data transmitted across the subcarriers 206 according to the SFBC scheme 208.

For example, data transmitted over the communication subcarrier 218 and the further subcarrier 220, such as the communication subcarrier data 222 and the further subcarrier data 224, can be processed together rather than independently or separately. As a more specific example, a set of processing steps or circuits can process, such as calculating, whitening, detecting, decoding, or a combination of processes based on both the communication subcarrier data 222 and the further subcarrier data 224.

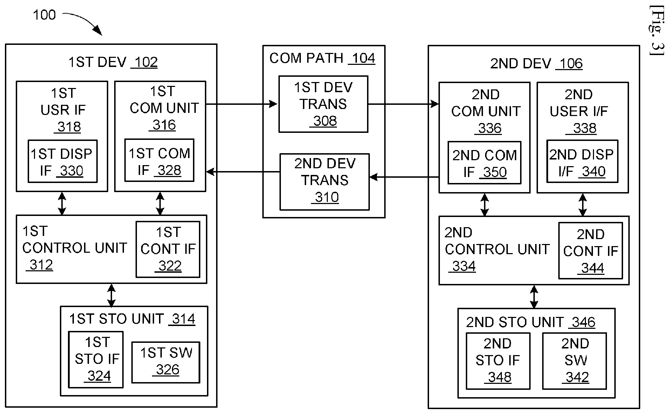

The communication system 100 can comprehensively or jointly process each set of data transmitted over the subcarriers 206 instead of independently or separately processing the each set of data transmitted over the subcarriers 206, such as using iterations or parallel processing separately corresponding to each set of the data. Details regarding the comprehensive or joint processing of data transmitted according to the SFBC scheme 208 will be discussed below.FIG. 3 is shown an exemplary block diagram of the communication system 100. The communication system 100 can include the first device 102, the communication path 104, and the second device 106. The first device 102 can transmit information in a first device transmission 308 over the communication path 104 to the second device 106. The second device 106 can transmit information in a second device transmission 310 over the communication path 104 to the first device 102.

For illustrative purposes, the communication system 100 is shown with the first device 102 as a client device, although it is understood that the communication system 100 can have the first device 102 as a different type of device. For example, the first device 102 can be a server having a display interface.

Also for illustrative purposes, the communication system 100 is shown with the second device 106 as a server, although it is understood that the communication system 100 can have the second device 106 as a different type of device. For example, the second device 106 can be a client device.

For brevity of description in this exemplary embodiment of the present invention, the first device 102 will be described as a client device and the second device 106 will be described as a server device. The exemplary embodiment of the present invention is not limited to this selection for the type of devices. The selection is an example of an exemplary embodiment of the present invention.

The first device 102 can include a first control unit 312, a first storage unit 314, a first communication unit 316, and a first user interface 318. The first control unit 312 can include a first control interface 322. The first control unit 312 can execute a first software 326 to provide the intelligence of the communication system 100.

The first control unit 312 can be implemented in a number of different manners. For example, the first control unit 312 can be a processor, an Application Specific Integrated Circuit (ASIC) an embedded processor, a microprocessor, a hardware control logic, a hardware Finite State Machine (FSM), a Digital Signal Processor (DSP), or a combination thereof. The first control interface 322 can be used for communication between the first control unit 312 and other functional units in the first device 102. The first control interface 322 can also be used for communication that is external to the first device 102.

The first control interface 322 can receive information from the other functional units or from external sources, or can transmit information to the other functional units or to external destinations. The external sources and the external destinations refer to sources and destinations external to the first device 102.

The first control interface 322 can be implemented in different ways and can include different implementations depending on which functional units or external units are being interfaced with the first control interface 322. For example, the first control interface 322 can be implemented with a pressure sensor, an inertial sensor, an MEMS, optical circuitry, waveguides, wireless circuitry, wireline circuitry, or a combination thereof.

The first storage unit 314 can store the first software 326. The first storage unit 314 can also store the relevant information, such as data representing incoming images, data representing previously presented image, sound files, or a combination thereof.

The first storage unit 314 can be a volatile memory, a nonvolatile memory, an internal memory, an external memory, or a combination thereof. For example, the first storage unit 314 can be a nonvolatile storage such as a Non-Volatile Random Access Memory (NVRAM), a flash memory, a disk storage, or a volatile storage such as a Static Random Access Memory (SRAM).

The first storage unit 314 can include a first storage interface 324. The first storage interface 324 can be used for communication between and other functional units in the first device 102. The first storage interface 324 can also be used for communication that is external to the first device 102.

The first storage interface 324 can receive information from the other functional units or from external sources, or can transmit information to the other functional units or to external destinations. The external sources and the external destinations refer to sources and destinations external to the first device 102.

The first storage interface 324 can include different implementations depending on which functional units or external units are being interfaced with the first storage unit 314. The first storage interface 324 can be implemented with technologies and techniques similar to the implementation of the first control interface 322.

The first communication unit 316 can enable external communication to and from the first device 102. For example, the first communication unit 316 can permit the first device 102 to communicate with the second device 106 of FIG. 1, an attachment, such as a peripheral device or a computer desktop, and the communication path 104.

The first communication unit 316 can also function as a communication hub allowing the first device 102 to function as part of the communication path 104 and not limited to be an end point or terminal unit to the communication path 104. The first communication unit 316 can include active and passive components, such as microelectronics or an antenna, for interaction with the communication path 104.

The first communication unit 316 can include a first communication interface 328. The first communication interface 328 can be used for communication between the first communication unit 316 and other functional units in the first device 102. The first communication interface 328 can receive information from the other functional units or can transmit information to the other functional units.

The first communication interface 328 can include different implementations depending on which functional units are being interfaced with the first communication unit 316. The first communication interface 328 can be implemented with technologies and techniques similar to the implementation of the first control interface 322.

The first user interface 318 allows a user (not shown) to interface and interact with the first device 102. The first user interface 318 can include an input device and an output device. Examples of the input device of the first user interface 318 can include a keypad, a touchpad, soft-keys, a keyboard, a microphone, an infrared sensor for receiving remote signals, or any combination thereof to provide data and communication inputs.

The first user interface 318 can include a first display interface 330. The first display interface 330 can include a display, a projector, a video screen, a speaker, or any combination thereof.

The first control unit 312 can operate the first user interface 318 to display information generated by the communication system 100. The first control unit 312 can also execute the first software 326 for the other functions of the communication system 100. The first control unit 312 can further execute the first software 326 for interaction with the communication path 104 via the first communication unit 316.

The second device 106 can be optimized for implementing an exemplary embodiment of the present invention in a multiple device embodiment with the first device 102. The second device 106 can provide the additional or higher performance processing power compared to the first device 102. The second device 106 can include a second control unit 334, a second communication unit 336, and a second user interface 338.

The second user interface 338 allows a user (not shown) to interface and interact with the second device 106. The second user interface 338 can include an input device and an output device. Examples of the input device of the second user interface 338 can include a keypad, a touchpad, soft-keys, a keyboard, a microphone, or any combination thereof to provide data and communication inputs. Examples of the output device of the second user interface 338 can include a second display interface 340. The second display interface 340 can include a display, a projector, a video screen, a speaker, or any combination thereof.

The second control unit 334 can execute a second software 342 to provide the intelligence of the second device 106 of the communication system 100. The second software 342 can operate in conjunction with the first software 326. The second control unit 334 can provide additional performance compared to the first control unit 312.

The second control unit 334 can operate the second user interface 338 to display information. The second control unit 334 can also execute the second software 342 for the other functions of the communication system 100, including operating the second communication unit 336 to communicate with the first device 102 over the communication path 104.

The second control unit 334 can be implemented in a number of different manners. For example, the second control unit 334 can be a processor, an embedded processor, a microprocessor, hardware control logic, a hardware FSM, a DSP, or a combination thereof.

The second control unit 334 can include a second control interface 344. The second control interface 344 can be used for communication between the second control unit 334 and other functional units in the second device 106. The second control interface 344 can also be used for communication that is external to the second device 106.

The second control interface 344 can receive information from the other functional units or from external sources, or can transmit information to the other functional units or to external destinations. The external sources and the external destinations refer to sources and destinations external to the second device 106.

The second control interface 344 can be implemented in different ways and can include different implementations depending on which functional units or external units are being interfaced with the second control interface 344. For example, the second control interface 344 can be implemented with a pressure sensor, an inertial sensor, an MEMS, optical circuitry, waveguides, wireless circuitry, wireline circuitry, or a combination thereof.

A second storage unit 346 can store the second software 342. The second storage unit 346 can also store the such as data representing incoming images, data representing previously presented image, sound files, or a combination thereof. The second storage unit 346 can be sized to provide the additional storage capacity to supplement the first storage unit 314.

For illustrative purposes, the second storage unit 346 is shown as a single element, although it is understood that the second storage unit 346 can be a distribution of storage elements. Also for illustrative purposes, the communication system 100 is shown with the second storage unit 346 as a single hierarchy storage system, although it is understood that the communication system 100 can have the second storage unit 346 in a different configuration. For example, the second storage unit 346 can be formed with different storage technologies forming a memory hierarchal system including different levels of caching, main memory, rotating media, or off-line storage.

The second storage unit 346 can be a volatile memory, a nonvolatile memory, an internal memory, an external memory, or a combination thereof. For example, the second storage unit 346 can be a nonvolatile storage such as an NVRAM, a flash memory, a disk storage, or a volatile storage such as an SRAM.

The second storage unit 346 can include a second storage interface 348. The second storage interface 348 can be used for communication between other functional units in the second device 106. The second storage interface 348 can also be used for communication that is external to the second device 106.

The second storage interface 348 can receive information from the other functional units or from external sources, or can transmit information to the other functional units or to external destinations. The external sources and the external destinations refer to sources and destinations external to the second device 106.

The second storage interface 348 can include different implementations depending on which functional units or external units are being interfaced with the second storage unit 346. The second storage interface 348 can be implemented with technologies and techniques similar to the implementation of the second control interface 344.

The second communication unit 336 can enable external communication to and from the second device 106. For example, the second communication unit 336 can permit the second device 106 to communicate with the first device 102 over the communication path 104.

The second communication unit 336 can also function as a communication hub allowing the second device 106 to function as part of the communication path 104 and not limited to be an end point or terminal unit to the communication path 104. The second communication unit 336 can include active and passive components, such as microelectronics or an antenna, for interaction with the communication path 104.

The second communication unit 336 can include a second communication interface 350. The second communication interface 350 can be used for communication between the second communication unit 336 and other functional units in the second device 106. The second communication interface 350 can receive information from the other functional units or can transmit information to the other functional units.

The second communication interface 350 can include different implementations depending on which functional units are being interfaced with the second communication unit 336. The second communication interface 350 can be implemented with technologies and techniques similar to the implementation of the second control interface 344.

The first communication unit 316 can couple with the communication path 104 to transmit information to the second device 106 in the first device transmission 308. The second device 106 can receive information in the second communication unit 336 from the first device transmission 308 of the communication path 104.

The second communication unit 336 can couple with the communication path 104 to transmit information to the first device 102 in the second device transmission 310. The first device 102 can receive information in the first communication unit 316 from the second device transmission 310 of the communication path 104. The communication system 100 can be executed by the first control unit 312, the second control unit 334, or a combination thereof. For illustrative purposes, the second device 106 is shown with the partition having the second user interface 338, the second storage unit 346, the second control unit 334, and the second communication unit 336, although it is understood that the second device 106 can have a different partition. For example, the second software 342 can be partitioned differently such that some or all of its function can be in the second control unit 334 and the second communication unit 336. Also, the second device 106 can include other functional units not shown in FIG. 3 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

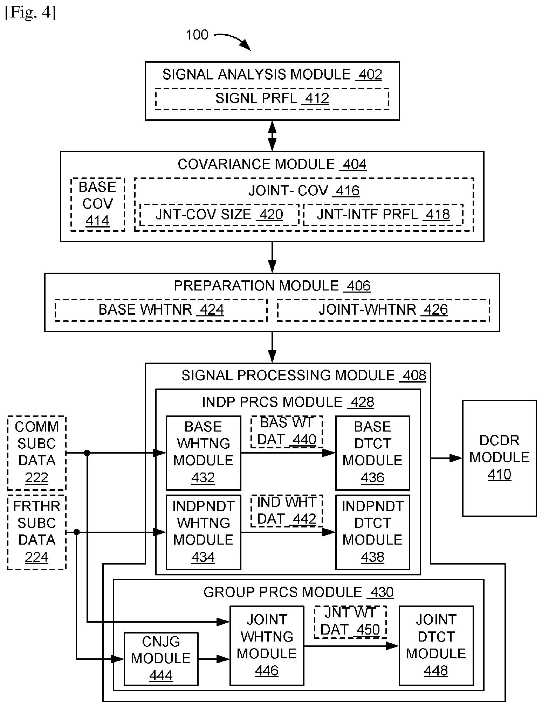

For illustrative purposes, the communication system 100 is described by operation of the first device 102 and the second device 106. It is understood that the first device 102 and the second device 106 can operate any of the modules and functions of the communication system 100.FIG. 4 is shown a control flow of the communication system 100. The communication system 100 can include a signal analysis module 402, a covariance module 404, a preparation module 406, a signal processing module 408, and a decoder module 410.

The signal analysis module 402 can be coupled to the covariance module 404, which can be coupled to the preparation module 406. The preparation module 406 can be coupled to the signal processing module 408, which can be coupled to the decoder module 410.

The modules can be coupled to each other in a variety of ways. For example, one or more outputs from one module, such as the signal analysis module 402 or the preparation module 406, can be connected to one or more inputs of another module, such as the signal processing module 408 or the covariance module 404.

The signal analysis module 402 is configured to receive the receiver signal 124 of FIG. 1. The signal analysis module 402 can receive the receiver signal 124 including the transmitter signal 110 of FIG. 1 and the interference signal 114 of FIG. 1. The signal analysis module 402 can receive the receiver signal 124 for communicating the transmitter signal 110 corresponding to the communication content 108 of FIG. 1. The interference signal 114 can be received incidental to receiving the transmitter signal 110.

The signal analysis module 402 can receive the receiver signal 124 including signals transmitted based on the SFBC scheme 208 of FIG. 2. The signal analysis module 402 can receive the receiver signal 124 having the communication subcarrier data 222 of FIG. 2 and the further subcarrier data 224 of FIG. 2. The communication subcarrier data 222 and the further subcarrier data 224 can be included in the transmitter signal 110, the interference signal 114, or a combination thereof for implementing the SFBC scheme 208.

The signal analysis module 402 by can receive the receiver signal 124 by recording the changes detected through the receiving antennas. The signal analysis module 402 can sample the voltage levels produced by the antennas in response to change in electro-magnetic flux levels.

The receiver signal 124 including the transmitter signal 110 and the interference signal 114 can be represented as:

[Math Figure 3]

$$y(k) = H(k)x(k) + G(k)z(k) + v(k).$$

The receiver signal 124 can be represented as 'y(k)', the serving channel estimate 126 of FIG. 1 can be represented by 'H(k)', and the communication content 108 can be represented by 'x(k)'. Also, the interference channel estimate 128 of FIG. 1 can be represented as 'G(k)' and the interference content 116 of FIG. 1 can be represented as 'z(k)'. The noise portion can be represented by 'v(k)'. The terms in Math Figure 3 can be Math Figure 2 represented for both the transmitter signal 110 and the interference signal 114.

The signal analysis module 402 can further characterize the transmitter channel 112 of FIG. 1, the interference channel 122 of FIG. 1, or a combination thereof. The signal analysis module 402 can to characterize the transmitter channel 112, the interference channel 122, or a combination thereof by estimating the serving channel estimate 126, the interference channel estimate 128, or a combination thereof based on the receiver signal 124.

The signal analysis module 402 can estimate the serving channel estimate 126, the interference channel estimate 128, or a combination thereof using a variety of methods. For example, the signal analysis module 402 can use the reference portion 113 of FIG. 1 transmitted by the base station 106 of FIG. 1 to estimate the serving channel estimate 126. The signal analysis module 402 can use the reference portion 113 transmitted by the interference source 118 of FIG. 1 to estimate the serving channel estimate 126.

Continuing with the example, the details regarding the reference portion 113, such as original frequency, phase, content, shape, or a combination thereof, can be predetermined by the communication standard, the communication system 100, or a combination thereof. The signal analysis module 402 can compare the received instances of the reference communication to the predetermined parameters for the reference portion 113. The signal analysis module 402 can use frequency or time domain transformation, convolution, transposition, basic mathematical operations, or a combination thereof with the predetermined or received instances of the reference communication, or both

Continuing with the example, the signal analysis module 402 can further calculate the changes in a magnitude, a frequency, a phase, or a combination thereof in the reference portion 113 in the receiver signal 124 corresponding to the transmitter signal 110, the interference signal 114, or a combination thereof. The signal analysis module 402 can use various methods such as the least square method, the Least Mean Square (LMS) method, or the Minimum Mean Square Error (MMSE) method to estimate the serving channel estimate 126, the interference channel estimate 128, or a combination thereof.

The signal analysis module 402 can also determine a signal profile 412. The signal profile 412 is an identification of one or more transmission format included in the receiver signal 124. The signal profile 412 can characterize the SFBC scheme 208 in relation to the transmitter signal 110, the interference signal 114, or a combination thereof. The signal profile 412 can include one or more status represent the transmitter signal 110, the interference signal 114, or a combination thereof transmitted using the SFBC scheme 208.

The signal analysis module 402 can determine the signal profile 412 in a variety of ways. For example, the signal analysis module 402 can determine the signal profile 412 by analyzing status or information transmitted by the source identifying the transmission format. The signal analysis module 402 can identify status or format information based on the reference portion 113 for the transmitter signal 110, the interference signal 114, or a combination thereof indicating the SFBC scheme 208 to determine the signal profile 412. Also for example, the signal analysis module 402 can identify the signal profile 412 using the format portion or the header portion in the receiver signal 124.

For further example, the signal analysis module 402 can determine the signal profile 412 based on covariance information resulting from the covariance module 404. As a more specific example, the signal analysis module 402 can determine the signal profile 412 to indicate that the interference signal 114 was not transmitted with the SFBC scheme 208 when the base covariance 414 is a block diagonal matrix.

Continuing with the example, the signal analysis module 402 can determine the signal profile 412 to indicate that the transmitter signal 110, the interference signal 114, or a combination thereof was transmitted with the SFBC scheme 208 when one or more result from the signal analysis module 402 is a block diagonal matrix. The signal analysis module 402 can perform other similar calculations to determine the format for the transmitter signal 110.

The signal analysis module 402 can receive the receiver signal 124 and the reference portions therein using the first communication unit 316 of FIG. 3, the second communication unit 336 of FIG. 3, or a combination thereof. The signal analysis module 402 can use the first control unit 312 of FIG. 3, the second control unit 334 of FIG. 3, or a combination thereof to estimate the serving channel estimate 126, the interference channel estimate 128, or a combination thereof. The signal analysis module 402 can store the serving channel estimate 126, the interference channel estimate 128, or a combination thereof in the first storage unit 314 of FIG. 3, the second storage unit 346 of FIG. 3, or a combination thereof.

After estimating one or more channels, the control flow can be passed from the signal analysis module 402 to the covariance module 404. The control flow can be passed by having processing results of the signal analysis module 402, such as the serving channel estimate 126, the interference channel estimate 128, or a combination thereof, pass from the signal analysis module 402 as input to the covariance module 404, by storing the processing results at a location known and accessible to the covariance module 404, by notifying the covariance module 404, such as by using a flag, an interrupt, a status signal, or a combination, or a combination of processes thereof.

The covariance module 404 is configured to calculate a covariance using the receiver signal 124. The covariance module 404 can calculate the covariance for the noise, the interference signal 114, the communication signal 110, data corresponding to the subcarriers 206, such as the communication subcarrier data 222 or the further subcarrier data 224, or a combination thereof.

The covariance module 404 can calculate a base covariance 414, a joint-covariance 416, or a combination thereof. The base covariance 414 is a measure of a relationship between interference and noise when a signal is transmitted without the SFBC scheme 208. The base covariance 414 can be calculated based on the receiver signal 124. The communication system 100 can use the base covariance 414 when the interference source 118 transmits the interference signal 114 without using the SFBC scheme 208.

The covariance module 404 can calculate the base covariance 414 using:

[Math Figure 4]

$$R(k) = E\{(G(k)z(k) + v(k))(G(k)z(k) + v(k))^H\} = G(k)G^H(k) + \sigma^2 I_{n_r}.$$

The '$I_{n_r}$' term can represent an identity matrix and '$\sigma^2$' can represent a noise variance.

The joint-covariance 416 is a measure of a relationship between interference and noise when a signal is transmitted using the SFBC scheme 208. The joint-covariance 414 can be calculated based on the receiver signal 124, data corresponding to the subcarriers 206 therein, or a combination thereof. The communication system 100 can use the joint-covariance 414 when the interference source 118 transmits the interference signal 114 using the SFBC scheme 208.

The covariance module 404 can calculate the joint-covariance 416 corresponding to the communication subcarrier data 222 and the further subcarrier data 224. The joint-covariance 416 can be for processing the receiver signal 124 corresponding to the interference signal 114 transmitted according to the SFBC scheme 208 or for processing the receiver signal 124 corresponding to the transmitter signal 110 and the interference signal 114, both transmitted according to the SFBC scheme 208.

The receiver signal 124 including the communication subcarrier data 222 and the further subcarrier data 224 transmitted using the SFBC scheme 208 can be expressed as:

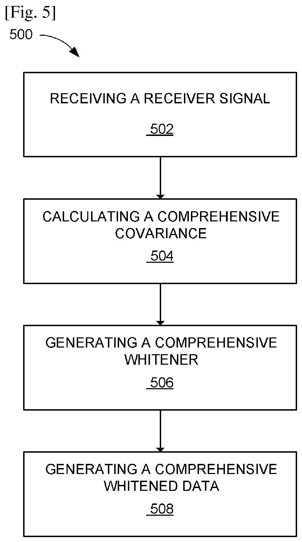

[Math Figure 5]

$$\begin{bmatrix} y(2k) \\ y^*(2k+1) \end{bmatrix} = \begin{bmatrix} H(2k) & 0 \\ 0 & H^*(2k+1) \end{bmatrix} \begin{bmatrix} x(2k) \\ x^*(2k+1) \end{bmatrix} + \begin{bmatrix} g_0(2k) & -g_1(2k) \\ g_1^*(2k+1) & g_0^*(2k+1) \end{bmatrix} \begin{bmatrix} z_0 \\ z_1^* \end{bmatrix} + \begin{bmatrix} v(2k) \\ v^*(2k+1) \end{bmatrix}.$$

The terms in Math Figure 5 can be expansion of Math Figure 3 for including the data transmitted over the subcarriers 206 of FIG. 2 using the SFBC scheme 208. If the base station 106 also uses the SFBC scheme 208, a model for the receiver signal 124 can be expressed as:

[Math Figure 6]

$$\begin{bmatrix} y(2k) \\ y^*(2k+1) \end{bmatrix} = \begin{bmatrix} h_0(2k) & -h_1(2k) \\ h_1^*(2k+1) & h_0^*(2k+1) \end{bmatrix} \begin{bmatrix} x_0 \\ x_1^* \end{bmatrix} + \begin{bmatrix} g_0(2k) & -g_1(2k) \\ g_1^*(2k+1) & g_0^*(2k+1) \end{bmatrix} \begin{bmatrix} z_0 \\ z_1^* \end{bmatrix} + \begin{bmatrix} v(2k) \\ v^*(2k+1) \end{bmatrix}.$$

The based on the receiver signal 124 as represented in Math Figure 5 and Math Figure 6, the covariance module 404 can calculate the joint-covariance 416 using:

[Math Figure 7]

$$\bar{R} = \bar{G}\bar{G}^H + \sigma^2 I_{n_r}.$$

The term '$\bar{R}$' can represent the joint-covariance 416. The term '$\bar{G}$' can represent a joint-interference profile 418, which is the interference channel estimate 128 for the subcarriers 206 using the SFBC scheme 208. The covariance matrices corresponding to both Math Figure 5 and Math Figure 6 can be expressed using Math Figure 7.

The joint-interference profile 418 can be for comprehensively or jointly characterizing the data transmitted using the subcarriers 206 associated with the interference signal 114 based on the SFBC scheme 208. The joint-interference profile 418 can be represented as:

[Math Figure 8]

$$\bar{G} = \begin{bmatrix} g_0(2k) & -g_1(2k) \\ g_1^*(2k+1) & g_0^*(2k+1) \end{bmatrix}.$$

The joint-covariance 416 can further have a joint-covariance size 420. The joint-covariance size 420 can be an amount, an arrangement, such as a quantity of columns or rows, or combination thereof for data in the joint-covariance 416. For example, the joint-covariance size 420 can be expressed as bytes, a matrix size, a number of columns therein, a number of rows therein, or a combination thereof.

The joint-covariance size 420 can be based on comprehensively or jointly whitening different portions within the receiver signal 124, such as data transmitted over instances of the subcarriers 206 based on the SFBC scheme 208. Based on the comprehensive or joint whitening capability, the joint-covariance size 420 can be greater than a size of the base covariance 414.

For example, the joint-covariance size 420 can have more bits or values, bigger matrix dimension, such as having more columns or rows, or a combination thereof. The joint-covariance size 420 being greater than the size of the base covariance 414 can be based on the fact that base covariance 414 represents covariance values individually for each of the subcarriers 206, while the joint-covariance 416 represents covariance values collectively for a set of the subcarriers 206.

The covariance module 404 can calculate either the base covariance 414 or the joint-covariance 416 based on the signal profile 412. For example, the signal analysis module 402 can calculate the base covariance 414, with or without calculating the joint-covariance 416, when the interference signal 114 is transmitted without using the SFBC scheme 208. Also for example, the signal analysis module 402 can calculate the joint-covariance 416, with or without calculating the base covariance 414, when the interference signal 114 is transmitted using the SFBC scheme 208.

The covariance module 404 can use the first communication unit 316, the second communication unit 336, the first control unit 312, the second control unit 334, or a combination thereof to calculate the base covariance 414, the joint-covariance 416, or a combination thereof. The covariance module 404 can store the base covariance 414, the joint-covariance 416, or a combination thereof in the first storage unit 314, the second storage unit 346, or a combination thereof.

After calculating the variance, the control flow can pass from the covariance module 404 to the preparation module 406. The control flow can pass similarly as described above between the signal analysis module 402 and the covariance module 404 but using processing results of the covariance module 404 instead of results of the signal analysis module 402.

The preparation module 406 is configured to generate a whitener for an interference whitening process, where correlated portions within the interference signal 114 are randomized. The preparation module 406 can generate a base whitener 424, a joint-whitener 426, or a combination thereof.

The base whitener 424 is a value or a set of values used in the whitening process when the interference signal 114 is transmitted without using the SFBC scheme 208. The base whitener 424 can randomize the communication subcarrier data 222 or the further subcarrier data 224 of the interference signal 114.

The joint-whitener 426 is a value or a set of values used in the whitening process when the interference signal 114 is transmitted using the SFBC scheme 208. The joint-whitener 426 can randomize a combination of related portions within the receiver signal 124, such as the communication subcarrier data 222 and the further subcarrier data 224, corresponding to the interference signal 114.

The preparation module 406 can generate the base whitener 424 using the base covariance 414. The preparation module 406 can generate the joint-whitener 426 using the joint-covariance 416. The preparation module 406 can generate the joint-whitener 426 for de-correlating contents of the interference signal 114 to randomize the interference signal 114 by comprehensively or jointly whitening both the communication subcarrier data 222 and the further subcarrier data 224 based on the SFBC scheme 208.

The base covariance 414, the joint-covariance 416, or a combination thereof can be expressed as:

[Math Figure 9]

$$R(k) = L(k)L^H(k).$$

The term 'L(k)' can represent a lower-triangular matrix. The preparation module 406 can calculate the lower-triangular matrix by computing the Cholesky decomposition of the base covariance 414, the joint-covariance 416, or a combination thereof.

The preparation module 406 can generate the base whitener 424, the joint-whitener 426, or a combination thereof using:

[Math Figure 10]

$$W(k) = L^{-1}(k).$$

The term 'W(k)' can represent the base whitener 424, the joint-whitener 426, or a combination thereof.

The preparation module 406 can generate the base whitener 424, the joint-whitener 426, or a combination thereof based on the signal profile 412. For example, the preparation module 406 can generate the base whitener 424, with or without generating the joint-whitener 426, for the interference signal 114 not based on the SFBC scheme 208. Also for example, the preparation module 406 can generate the joint-whitener 426, with or without generating the base whitener 424, for the interference signal 114 based on the SFBC scheme 208.

The preparation module 406 can use the first communication unit 316, the second communication unit 336, the first control unit 312, the second control unit 334, or a combination thereof to generate the base whitener 424, the joint-whitener 426, or a combination thereof. The preparation module 406 can store the base whitener 424, the joint-whitener 426, or a combination thereof in the first storage unit 314, the second storage unit 346, or a combination thereof.

After generating the whitener, the control flow can pass from the preparation module 406 to the signal processing module 408. The control flow can pass similarly as described above between the signal analysis module 402 and the covariance module 404 but using processing results of the preparation module 406 instead of results of the signal analysis module 402.

The signal processing module 408 is configured to detect the communication content 108 from the receiver signal 124. The signal processing module 408 can have an independent processing module 428 and a group processing module 430 for detecting the communication content 108.

The independent processing module 408 is configured to independently detect portions the communication content 108 from separately processing the communication subcarrier data 222 and the further subcarrier data 224. The independent processing module 408 can whiten and detect for the communication subcarrier data 222 and separately whiten and detect the further subcarrier data 224. The independent processing module 408 can include a base whitening module 432, an independent whitening module 434, a base detection module 436, and a independent detection module 438.

The base whitening module 432 is configured to whiten the communication subcarrier data 222. The base whitening module 432 can whiten the communication subcarrier data 222 using the base whitener 424.

Since detection process assumes that the interference, the noise, or a combination thereof will be random, the base whitening module 432 can use the whitening process to de-correlate the interference signal 114, the noise, or a combination thereof associated with the communication subcarrier data 222. The base whitening module 432 can perform the whitening process by combining the base whitener 424, such as by multiplying, adding, performing matrix operations, or a combination thereof, and the communication subcarrier data 222.

The base whitening module 432 can generate a base whitened data 440 by combining the base whitener 424 and the communication subcarrier data 222. The base whitened data 440 can include one or more portions previously corresponding to the interference signal 114, the noise, or a combination thereof and having a block diagonal matrix as a covariance thereof after the whitening process.

The base whitening module 432 can use the first communication unit 316, the second communication unit 336, the first control unit 312, the second control unit 334, or a combination thereof to perform the whitening process. The base whitening module 432 can store the base whitened data 440 in the first storage unit 314, the second storage unit 346, or a combination thereof.

The independent whitening module 434 is configured to whiten the further subcarrier data 224. The independent whitening module 434 can perform the whitening process using the base whitener 424 for the further subcarrier data 224. The independent whitening module 434 can combine the base whitener 424 and the further subcarrier data 224 to generate an independent whitened data 442.

The independent whitening module 434 can whiten the further subcarrier data 224 separate from whitening the communication subcarrier data 222. For example, the base whitening module 432 and the independent whitening module 434 can be two separate modules as shown in FIG. 4. Also for example, the base whitening module 432 and the independent whitening module 434 can be combined into one module and use multiple independent iterations for whitening the further subcarrier data 224 separate from whitening the communication subcarrier data 222.

The independent whitening module 434 can use the first communication unit 316, the second communication unit 336, the first control unit 312, the second control unit 334, or a combination thereof to perform the whitening process. The independent whitening module 434 can store the independent whitened data 442 in the first storage unit 314, the second storage unit 346, or a combination thereof.

The base detection module 436 is configured to detect a symbol, a bit, or a combination thereof from a result of whitening the communication subcarrier data 222. The base detection module 436 can detect or initially process for a portion of the communication content 108 corresponding to the communication subcarrier data 222. The base detection module 436 can use the base whitened data 440 to perform the detection process.

The base detection module 436 can detect the portion of the communication content 108 using a Maximum Likelihood (ML) mechanism. The base detection module 436 can detect the portion of the communication content 108 using:

[Math Figure 11]

$$\hat{x}_{\mathrm{ML}}(k) = \max_x \Pr\big(y(k)\big|x(k)\big) = \min_x ||W(k)y(k) - W(k)H(k)x(k)||^2.$$

The base whitened data 440 can be represented by 'W(k)'. The receiver signal 124 or a portion therein, such as the communication subcarrier data 222, can be represented by 'y(k)'. The portion of the communication content 108 corresponding to the communication subcarrier data 222 resulting from the detection process can be represented as 'x(k)'.

The base detection module 436 can use the first communication unit 316, the second communication unit 336, the first control unit 312, the second control unit 334, or a combination thereof to detect the portion of the communication content 108. The base detection module 436 can store the portion of the communication content 108 resulting from the detection process in the first storage unit 314, the second storage unit 346, or a combination thereof.

The independent detection module 438 is configured to a symbol, a bit, or a combination thereof from a result of whitening the further subcarrier data 224. The independent detection module 438 can be similar to the base detection module 436 but for the further subcarrier data 224 instead of the communication subcarrier data 222.

For example, the independent detection module 438 can detect or initially process for a further portion of the communication content 108 corresponding to the further subcarrier data 224 using the base whitened data 440. Also for example, the independent detection module 438 can use Math Figure 11 with the further subcarrier data 224 corresponding to 'y(k)' to detect the further portion of the communication content 108 corresponding to the further subcarrier data 224.

The independent detection module 438 can detect or initially process for the further portion of the communication content 108 separate from detecting for the portion of the communication content 108 corresponding to the communication subcarrier data 222. For example, the independent detection module 438 and the base detection module 436 can be two separate modules as shown in FIG. 4. Also for example, the independent detection module 438 and the base detection module 436 can be combined into one module and use multiple independent iterations for performing the detection process based on the base whitened data 440 separate from the process based on the independent whitened data 442.

The group processing module 430 is configured to comprehensively or jointly detect all or portions of the communication content 108 by comprehensively or jointly processing the communication subcarrier data 222 and the further subcarrier data 224. The group processing module 430 can simultaneously whiten and simultaneously detect both the communication subcarrier data 222 and the further subcarrier data 224. The group processing module 430 can include a conjugation module 444, a joint whitening module 446, and a joint detection module 448.

The conjugation module 444 is configured to conjugate a set of data received from one of the subcarriers 206 when the SFBC scheme 208 is used. The conjugation module 444 can conjugate either the communication subcarrier data 222 or the further subcarrier data 224. The conjugation module can conjugate the data by altering frequency, phase, negating signs for values or portions of values, such as the portion corresponding to imaginary numbers.

For illustrative purpose, the communication system 100 will be discussed as conjugating the further subcarrier data 224. However, it is understood that the communication system 100 can conjugate the communication subcarrier data 222 instead of the further subcarrier data 224.

The joint whitening module 446 is configured to comprehensively or jointly whiten all data received using the subcarriers 206 with the SFBC scheme 208. The joint whitening module 446 can whiten both the communication subcarrier data 222 and the further subcarrier data 224 together in a comprehensive or joint manner, simultaneously involving both sets of data. The joint whitening module 446 can whiten the communication subcarrier data 222 and the further subcarrier data 224 using the joint-whitener 426.

Since detection process assumes that the interference, the noise, or a combination thereof will be random, the joint whitening module 446 can use the whitening process to de-correlate the interference signal 114, the noise, or a combination thereof associated with the communication subcarrier data 222 and the further subcarrier data 224. The base joint whitening module 446 can perform the whitening process by combining the joint-whitener 426, such as by multiplying, adding, performing matrix operations, or a combination thereof, with the communication subcarrier data 222 and the further subcarrier data 224.

The joint whitening module 446 can generate a joint-whitened data 450 based on the receiver signal 124 and the joint-whitener 424. The joint whitening module 446 can generate the joint-whitened data 450 by combining the joint-whitener 426, the communication subcarrier data 222, and the further subcarrier data 224. The joint-whitened data 450 can include one, multiple, or all portions previously corresponding to the interference signal 114, the noise, or a combination thereof and having a block diagonal matrix as a covariance thereof after the whitening process.

The joint whitening module 432 can use the first communication unit 316, the second communication unit 336, the first control unit 312, the second control unit 334, or a combination thereof to perform the whitening process. The joint whitening module 432 can store the joint-whitened data 450 in the first storage unit 314, the second storage unit 346, or a combination thereof.

The joint detection module 448 is configured detect a symbol, a bit, or a combination thereof from a result of comprehensively or jointly whitening both the communication subcarrier data 222 and the further subcarrier data 224. The joint detection module 448 can detect or initially process for the communication content 108 or portions therein corresponding to the communication subcarrier data 222 and the further subcarrier data 224. The joint detection module 448 can use the joint-whitened data 450 to perform the detection process.

The joint detection module 448 can detect the communication content 108 or portions therein using the ML mechanism. When the serving cell does not use the SFBC scheme 208, the joint detection module 448 can detect communication content 108 or portions therein using:

[Math Figure 12]

$$\left(\hat{x}^{ML}(2k), \hat{x}^{ML}(2k+1)\right) = \min_{x_0, x_1} \left\| \overline{W} \begin{bmatrix} y(2k) \\ y^*(2k+1) \end{bmatrix} - \overline{W} \begin{bmatrix} H(2k) & 0 \\ 0 & H^*(2k+1) \end{bmatrix} \begin{bmatrix} x(2k) \\ x^*(2k+1) \end{bmatrix} \right\|^2.$$

When the serving cell uses the SFBC scheme 208, the joint detection module 448 can detect communication content 108 or portions therein using:

[Math Figure 13]

$$\left(\hat{x}_0^{ML}, \hat{x}_1^{ML}\right) = \min_{x_0, x_1} \left\| \overline{W} \begin{bmatrix} y(2k) \\ y^*(2k+1) \end{bmatrix} - \overline{W} \begin{bmatrix} h_0(2k) & -h_1(2k) \\ h_1^*(2K+1) & h_0^*(2k+1) \end{bmatrix} \begin{bmatrix} x_0 \\ x_1^* \end{bmatrix} \right\|^2.$$

The joint detection module 448 use the first communication unit 316, the second communication unit 336, the first control unit 312, the second control unit 334, or a combination thereof to detect the communication content 108 or portions therein. The joint detection module 448 can store the communication content 108 or portions therein resulting from the detection process in the first storage unit 314, the second storage unit 346, or a combination thereof.

The signal processing module 408 can use the independent processing module 428, the group processing module 430, or a combination thereof to process various possible combinations of transmission formats involving the base station 106 and the interference source 118, as indicated by the signal profile 412. For example, the signal processing module 408 can process the receiver signal 124 corresponding to transmission when both the transmitter signal 110 and the interference signal 114 do not utilize the SFBC scheme 208, when only the transmitter signal 110 utilizes the SFBC scheme 208, when only the interference signal 114 utilizes the SFBC scheme 208, when both the transmitter signal 110 and the interference signal 114 utilize the SFBC scheme 208, or a combination thereof.

As a more specific example, when only the transmitter signal 110 utilizes the SFBC scheme 208, the signal processing module 408 can process the receiver signal 124 using both the independent processing module 428 and the group processing module 430, or portions therein. For example, the covariance module 404 can calculate the base covariance 414 according to the signal profile 412, and the preparation module 406 can generate the base whitener 424 accordingly.

Continuing with the example, the signal processing module 408 can independently whiten the receiver signal 124. The signal processing 408 can pass the base whitened data 440 and the independent whitened data 442 to the joint detector module 448 for the detection process. The signal processing module 408 can further combine the base whitened data 440 and the independent whitened data 442 to calculate the joint-whitened data 450, which can be passed to the joint detector module 448.

After the whitening and the detecting process, the control flow can pass from the signal processing module 408 to the decoder module 410. The control flow can pass similarly as described above between the signal analysis module 402 and the covariance module 404 but using processing results of the signal processing module 408 instead of results of the signal analysis module 402.

The decoder module 410 is configured to process the output data of the base detector module 436, the independent detector module 438, the joint detector module 448, or a combination thereof into the communication data 108. For example, the decoder module 410 can make error corrections, interleave, de-interleave, process according to the coding scheme, such as turbo coding or polar coding, or a combination thereof for the detected data resulting from the base detector module 436, the independent detector module 438, the joint detector module 448, or a combination thereof. Also for example, the decoder module 410 can be a Viterbi decoder or a sphere decoder.

The communication system 100 can use the base detector module 436, the independent detector module 438, the joint detector module 448, the decoder module 410, or a combination thereof to determine the communication content 108. The communication system 100 can determine the communication content 108 from the joint-whitened data 450, resulting from processing the receiver signal 124 including the interference signal 114 transmitted using the SFBC scheme 208. The communication system 100 can communicate the communication content 108 resulting from the decoding process of the decoder module 410, such as by displaying or reproducing the content on the mobile device 102.

It has been discovered that the signal profile 412 and the reference portion 113 adapted or adjusted to include information regarding the SFBC scheme 208 provide increased accuracy and higher throughput. The adapted instance of the reference portion 113 and the signal profile 412 can be used by the communication system 100 to appropriately whiten and process the receiver signal 124. The adapted instance of the reference portion 113 and the signal profile 412 can be used to utilize the comprehensive or joint processing better suited for the SFBC scheme 208 without any unnecessary calculations.

It has also been discovered that the joint-covariance 416, having the joint-covariance size 420 and the joint-interference profile 418, and the joint-whitener 426 provide decreased error rate. The joint-covariance 416, having joint-covariance size 420 and the joint-interference profile 418, and the joint-whitener 426 can be used to comprehensively or jointly whiten portions within the interference signal 114 transmitted using the SFBC scheme 208. The comprehensive or joint whitening process using the joint-covariance 416 and the joint-whitener 426 can fully utilize the correlation in the interference signal 114 across the subcarriers 206 resulting from the SFBC scheme 208.

It has further been discovered that the joint-whitened data 450 and the joint detection module 448 provide increased transmission speed. The joint-whitened data 450 and the joint detection module 448 allow for the interference signal 114 transmitted using the SFBC scheme 208 to be accurately de-correlated and correctly processed. The increased accuracy in signal processing can reduce retransmissions, which can lead to increase in the overall transmission speed.

The communication system 100 has been described with module functions or order as an example. The communication system 100 can partition the modules differently or order the modules differently. For example, functions of the covariance module 404 and the preparation module 406 can be combined. Also for example, calculation of the base covariance 414, generation of the base whitener 424, and the functions of the independent processing module 428 can be combined or grouped into a module. Similarly, calculation of the joint-covariance 416, generation of the joint-whitener 426, and the functions of the group processing module 430 can be combined or grouped into a module.

The modules described in this application can be hardware implementation or hardware accelerators, including passive circuitry, active circuitry, or both, in the first control unit 316 or in the second control unit 338. The modules can also be hardware implementation or hardware accelerators, including passive circuitry, active circuitry, or both, within the mobile device 102 or the base station 106 but outside of the first control unit 316 or the second control unit 338, respectively.

The physical transformation from the joint-covariance 416, the joint-whitener 426, and the signal profile 412 results in the movement in the physical world, such as content displayed or recreated for the user on the mobile device 102. The content, such as navigation information or voice signal of a caller, recreated on the first device 102 can influence the user's movement, such as following the navigation information or replying back to the caller. Movement in the physical world results in changes to the interference signal 114 or interference channel estimate 128, which can be fed back into the system to influence the content or a determination thereof.FIG. 5 is shown a flow chart of a method 500 of operation of a communication system 100 in an exemplary embodiment of the present invention. The method 500 includes: receiving a receiver signal for communicating a transmitter signal with an interference signal in a block 502; calculating a joint-covariance corresponding to a communication subcarrier data and a further subcarrier data within the receiver signal in a block 504; generating a joint-whitener based on the joint-covariance for randomizing the interference signal in a block 506; and generating a joint-whitened data based on the receiver signal and the joint-whitener for communicating with a device in a block 508.

It has been discovered that the reference portion 113 of FIG. 1 adapted or adjusted to include information regarding the SFBC scheme 208 of FIG. 2 and the signal profile 412 of FIG. 4 provide increased accuracy and higher throughput. It has also been discovered that the joint-covariance 416 of FIG. 4, having joint-covariance size 420 of FIG. 4 and the joint-interference profile 418, of FIG. 4 and the joint-whitener 426 of FIG. 4 provide decreased error rate. It has further been discovered that the joint-whitened data 450 of FIG. 4 and the joint detection module 448 of FIG. 4 provide increased transmission speed.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an exemplary embodiment of the present invention is that it valuably supports and services the historical trend of reducing costs, simplifying systems, and increasing performance.

These and other valuable aspects of an exemplary embodiment of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters set forth herein or shown in the accompanying drawings are to be interpreted in an illustrative and non-limiting sense.

**Claims**

1. A method for performing a whitening operation by a receiver in a communication system, the method comprising:

   receiving (502), from a transmitter, a signal including an interference signal;
   determining a signal profile for identifying one or more transmission format included in the received signal based on the received signal;
   determining whether the received signal is transmitted with a space-frequency block-coding scheme based on the signal profile;
   when the received signal is transmitted with the space-frequency block-coding scheme, calculating (504) a joint-covariance by using first subcarrier data and second subcarrier data included in the received signal based on the signal profile;
   generating (506) a joint-whitener based on the joint-covariance for randomizing the interference signal; and
   generating a joint-whitened data based on the received signal and the joint-whitener.

2. The method as claimed in claim 1, further comprises determining a communication content from the joint-whitened data.

3. The method as claimed in claim 1, wherein:
   generating (506) the joint-whitener comprises generating the joint-whitener for jointly whitening both the first subcarrier data and the second subcarrier data based on the space-frequency block-coding scheme.

4. The method as claimed in claim 1, wherein:
   calculating (504) the joint-covariance comprises calculating the joint-covariance including a joint-covariance size for jointly whitening the received signal based on the space-frequency block-coding scheme.

**5.** The method as claimed in claim 1, wherein:
calculating (504) the joint-covariance comprises calculating the joint-covariance including a joint-interference profile for jointly characterizing the interference signal based on the space-frequency block-coding scheme.

**6.** The method as claimed in claim 1, wherein:
calculating (504) the joint-covariance comprises calculating the joint-covariance based on the signal profile.

**7.** The method as claimed in claim 6, wherein determining the signal profile comprises determining the signal profile based on a reference portion included in the received signal, the reference portion includes information about a signal transmitted by the transmitter according to a space-frequency block-coding scheme.

**8.** The method as claimed in claim 6, wherein calculating (504) the joint-covariance comprises calculating the joint-covariance including a joint-covariance size for exceeding a base whitener accommodating either of the first subcarrier data or the second subcarrier data.

**9.** The method as claimed in claim 6, wherein:

determining the signal profile comprises determining the signal profile for representing the interference signal transmitted according to a space-frequency block-coding scheme; and
calculating (504) the joint-covariance comprises calculating the joint-covariance for processing the received signal corresponding to the interference signal transmitted according to the space-frequency block-coding scheme.

**10.** The method as claimed in claim 6, wherein:

determining the signal profile comprises determining the signal profile for representing both a signal of the transmitter and the interference signal transmitted according to a space-frequency block-coding scheme; and
calculating (504) the joint-covariance comprises calculating the joint-covariance for processing the received signal corresponding to a signal of the transmitter and the interference signal, transmitted according to the space-frequency block-coding scheme.

**11.** A receiver (102) in a communication system (100), the receiver comprising:

a communication unit configured to receive, from a transmitter, a signal including an interference signal; and
a control unit configured to:

determine a signal profile for identifying one or more transmission format included in the received signal based on the received signal;
determine whether the received signal is transmitted with a space-frequency block-coding scheme based on the signal profile;
when the received signal is transmitted with the space-frequency block-coding scheme, calculate a joint-covariance by using first subcarrier data and second subcarrier data included in the received signal based on the signal profile;
generate a joint-whitener based on the joint-covariance for randomizing the interference signal; and
generate a joint-whitened data based on the received signal and the joint-whitener.

**12.** The receiver as claimed in claim 11, wherein the receiver is configured to perform a method described in at least one of claims 2 to 10.

**Patentansprüche**

**1.** Verfahren zum Durchführen eines Aufhellungsvorgangs durch einen Empfänger in einem Kommunikationssystem, wobei das Verfahren Folgendes umfasst:

Empfangen (502) eines Signals, einschließlich eines Interferenzsignals, von einem Sender;
Bestimmen eines Signalprofils zum Identifizieren eines oder mehrerer im empfangenen Signal enthaltener Sendeformate auf Grundlage des empfangenen Signals;

Bestimmen, ob das empfangene Signal mit einem Raum-Frequenz-Blockkodierschema gesendet wurde, auf Grundlage des Signalprofils;

wenn das empfangene Signal mit dem Raum-Frequenz-Blockkodierschema gesendet wurde, Berechnen (504) einer gemeinsamen Kovarianz unter Verwendung von im empfangenen Signal enthaltenen ersten Hilfsträgerdaten und zweiten Hilfsträgerdaten auf Grundlage des Signalprofils;

Erzeugen (506) eines gemeinsamen Aufhellers auf Grundlage der gemeinsamen Kovarianz zum Randomisieren des Interferenzsignals; und

Erzeugen von gemeinsam aufgehellten Daten auf Grundlage des empfangenen Signals und des gemeinsamen Aufhellers.

2. Verfahren nach Anspruch 1, ferner umfassend das Bestimmen eines Kommunikationsinhalts aus den gemeinsam aufgehellten Daten.

3. Verfahren nach Anspruch 1, wobei:

das Erzeugen (506) des gemeinsamen Aufhellers das Erzeugen des gemeinsamen Aufhellers zum gemeinsamen Aufhellen sowohl der ersten Hilfsträgerdaten als auch der zweiten Hilfsträgerdaten auf Grundlage des Raum-Frequenz-Blockkodierschemas umfasst.

4. Verfahren nach Anspruch 1, wobei:

das Berechnen (504) der gemeinsamen Kovarianz das Berechnen der gemeinsamen Kovarianz einschließlich einer Größe der gemeinsamen Kovarianz zum gemeinsamen Aufhellen des empfangenen Signals auf Grundlage des Raum-Frequenz-Blockkodierschemas umfasst.

5. Verfahren nach Anspruch 1, wobei:

das Berechnen (504) der gemeinsamen Kovarianz das Berechnen der gemeinsamen Kovarianz einschließlich eines gemeinsamen Interferenzprofils zum gemeinsamen Charakterisieren des Interferenzsignals auf Grundlage des Raum-Frequenz-Blockkodierschemas umfasst.

6. Verfahren nach Anspruch 1, wobei:

das Berechnen (504) der gemeinsamen Kovarianz das Berechnen der gemeinsamen Kovarianz auf Grundlage des Signalprofils umfasst.

7. Verfahren nach Anspruch 6, wobei das Bestimmen des Signalprofils das Bestimmen des Signalprofils auf Grundlage eines im empfangenen Signal enthaltenen Referenzabschnitts umfasst, wobei der Referenzabschnitt Informationen über ein Signal beinhaltet, das durch den Sender gemäß einem Raum-Frequenz-Blockkodierschema gesendet wurde.

8. Verfahren nach Anspruch 6, wobei das Berechnen (504) der gemeinsamen Kovarianz das Berechnen der gemeinsamen Kovarianz einschließlich einer Größe der gemeinsamen Kovarianz zum Überschreiten eines Grundaufhellers, der entweder die ersten Hilfsträgerdaten oder die zweiten Hilfsträgerdaten berücksichtigt, umfasst.

9. Verfahren nach Anspruch 6, wobei:

das Bestimmen des Signalprofils das Bestimmen des Signalprofils zum Wiedergeben des gemäß einem Raum-Frequenz-Blockkodierschema gesendeten Interferenzsignals umfasst; und

das Berechnen (504) der gemeinsamen Kovarianz das Berechnen der gemeinsamen Kovarianz zum Verarbeiten des empfangenen Signals entsprechend dem gemäß dem Raum-Frequenz-Blockkodierschema gesendeten Interferenzsignal umfasst.

10. Verfahren nach Anspruch 6, wobei:

das Bestimmen des Signalprofils das Bestimmen des Signalprofils zum Wiedergeben sowohl eines Signals des Senders als auch des gemäß einem Raum-Frequenz-Blockkodierschema gesendeten Interferenzsignals umfasst; und

das Berechnen (504) der gemeinsamen Kovarianz das Berechnen der gemeinsamen Kovarianz zum Verarbeiten des empfangenen Signals entsprechend einem Signal des Senders und dem gemäß dem Raum-Frequenz-Blockkodierschemas gesendeten Interferenzsignal umfasst.

**11.** Empfänger (102) in einem Kommunikationssystem (100), wobei der Empfänger Folgendes umfasst:
eine Kommunikationseinheit, die dazu konfiguriert ist, ein Signal, einschließlich eines Interferenzsignals, von einem Sender zu empfangen; und eine Steuereinheit, die zu Folgendem konfiguriert ist:

Bestimmen eines Signalprofils zum Identifizieren eines oder mehrerer im empfangenen Signal enthaltener Sendeformate auf Grundlage des empfangenen Signals;
Bestimmen, ob das empfangene Signal mit einem Raum-Frequenz-Blockkodierschema gesendet wurde, auf Grundlage des Signalprofils;
wenn das empfangene Signal mit dem Raum-Frequenz-Blockkodierschema gesendet wurde, Berechnen einer gemeinsamen Kovarianz unter Verwendung von im empfangenen Signal enthaltenen ersten Hilfsträgerdaten und zweiten Hilfsträgerdaten auf Grundlage des Signalprofils; Erzeugen eines gemeinsamen Aufhellers auf Grundlage der gemeinsamen Kovarianz zum Randomisieren des Interferenzsignals; und
Erzeugen von gemeinsam aufgehellten Daten auf Grundlage des empfangenen Signals und des gemeinsamen Aufhellers.

**12.** Empfänger nach Anspruch 11, wobei der Empfänger dazu konfiguriert ist, ein in mindestens einem der Ansprüche 2 bis 10 beschriebenes Verfahren durchzuführen.

**Revendications**

**1.** Procédé permettant d'exécuter une opération de blanchiment par un récepteur dans un système de communication, le procédé comprenant :

la réception (502), en provenance d'un récepteur, d'un signal comprenant un signal d'interférence ;
la détermination d'un profil de signal pour identifier un ou plusieurs formats de transmission inclus dans le signal reçu sur la base du signal reçu ;
la détermination pour savoir si le signal reçu est transmis avec un schéma de codage par bloc espace-fréquence sur la base du profil de signal ;
lorsque le signal reçu est transmis avec le schéma de codage par bloc espace-fréquence, le calcul (504) d'une covariance conjointe à l'aide de premières données de sous-porteuse et de secondes données de sous-porteuse incluses dans le signal reçu sur la base du profil de signal ;
la génération (506) d'un blanchisseur conjoint sur la base de la covariance conjointe pour répartir au hasard le signal d'interférence ; et
la génération de données blanchies conjointes sur la base du signal reçu et du blanchisseur conjoint.

**2.** Procédé selon la revendication 1, comprenant en outre la détermination d'un contenu de communication à partir des données blanchies conjointes.

**3.** Procédé selon la revendication 1 :
ladite génération (506) du blanchisseur conjoint comprenant la génération du blanchisseur conjoint pour blanchir conjointement à la fois les premières données de sous-porteuse et les secondes données de sous-porteuse sur la base du schéma de codage par bloc espace-fréquence.

**4.** Procédé selon la revendication 1 :
le calcul (504) de la covariance conjointe comprenant le calcul de la covariance conjointe comprenant une taille de covariance conjointe pour blanchir conjointement le signal reçu sur la base du schéma de codage par bloc espace-fréquence.

**5.** Procédé selon la revendication 1 :
ledit calcul (504) de la covariance conjointe comprenant le calcul de la covariance conjointe comprenant un profil d'interférence conjointe pour caractériser conjointement le signal d'interférence sur la base du schéma de codage par bloc espace-fréquence.

**6.** Procédé selon la revendication 1 :
ledit calcul (504) de la covariance conjointe comprenant le calcul de la covariance conjointe sur la base du profil de signal.

**7.** Procédé selon la revendication 6, ladite détermination du profil de signal comprenant la détermination du profil de signal sur la base d'une partie de référence incluse dans le signal reçu, la partie de référence comprenant des informations au sujet d'une signal transmis par l'émetteur selon un schéma de codage par bloc espace-fréquence.

**8.** Procédé selon la revendication 6, ledit calcul (504) de la covariance conjointe comprenant le calcul de la covariance conjointe comprenant une taille de covariance conjointe pour dépasser un blanchisseur de base accueillant soit les premières données de sous-porteuse soit les secondes données de sous-porteuse.

**9.** Procédé selon la revendication 6 :

ladite détermination du profil de signal comprenant la détermination du profil de signal pour représenter le signal d'interférence transmis selon un schéma de codage par bloc espace-fréquence ; et
ledit calcul (504) de la covariance conjointe comprenant le calcul de la covariance conjointe pour traiter le signal reçu correspondant au signal d'interférence transmis selon le schéma de codage par bloc espace-fréquence.

**10.** Procédé selon la revendication 6 :

ladite détermination du profil de signal comprenant la détermination du profil de signal pour représenter aussi bien un signal de l'émetteur que le signal d'interférence transmis selon un schéma de codage par bloc espace-fréquence ; et
ledit calcul (504) de la covariance conjointe comprenant le calcul de la covariance conjointe pour traiter le signal reçu correspondant à un signal de l'émetteur et le signal d'interférence, transmis selon le schéma de codage par bloc espace-fréquence.

**11.** Récepteur (102) dans un système de communication (100), le récepteur comprenant :

une unité de communication conçue pour recevoir, en provenance d'un émetteur, un signal comprenant un signal d'interférence ; et
une unité de commande conçue pour :

déterminer un profil de signal pour identifier un ou plusieurs formats de transmission inclus dans le signal reçu sur la base du signal reçu ;
déterminer si le signal reçu est transmis avec un schéma de codage par bloc espace-fréquence sur la base du profil de signal ;
lorsque le signal reçu est transmis avec le schéma de codage par bloc espace-fréquence, calculer une covariance conjointe à l'aide de premières données de sous-porteuse et de secondes données de sous-porteuse incluses dans le signal reçu sur la base du profil de signal ;
générer un blanchisseur conjoint sur la base de la covariance conjointe pour répartir au hasard le signal d'interférence ; et
générer des données blanchies conjointes sur la base du signal reçu et du blanchisseur conjoint.

**12.** Récepteur selon la revendication 11, ledit récepteur étant conçu pour exécuter un procédé décrit dans au moins l'une des revendications 2 à 10.

[Fig. 1]

[Fig. 2]

[Fig. 3]

EP 2 920 898 B1

[Fig. 4]

$100$

[Fig. 5]

500

```
┌─────────────────────────────────┐
│   RECEIVING A RECEIVER SIGNAL    │
│                                  │
│               502                │
└─────────────────────────────────┘
                 │
                 ▼
┌─────────────────────────────────┐
│   CALCULATING A COMPREHENSIVE    │
│           COVARIANCE             │
│               504                │
└─────────────────────────────────┘
                 │
                 ▼
┌─────────────────────────────────┐
│   GENERATING A COMPREHENSIVE     │
│            WHITENER              │
│               506                │
└─────────────────────────────────┘
                 │
                 ▼
┌─────────────────────────────────┐
│   GENERATING A COMPREHENSIVE     │
│          WHITENED DATA           │
│               508                │
└─────────────────────────────────┘
```